# EUROPEAN PATENT SPECIFICATION

(11) **EP 1 542 463 B1**
(45) Date of publication and mention of the grant of the patent: **08.09.2010**
(21) Application number: 04105258.0
(22) Date of filing: 22.10.2004
(51) Int. Cl.: H04N 7/00, H04N 5/00

(54) **A broadcast routing system**
System zum Routen von Rundfunkdaten
Système radiotransmis pour le routage

(30) Priority: 24.11.2003 KR 2003083680
(43) Date of publication of application: 15.06.2005
(73) Proprietor: SAMSUNG ELECTRONICS CO., LTD., Suwon-si, Gyeonggi-Do 442-742 (KR)
(72) Inventor: Song, Min-suk, Gyeonggi-do (KR)
(74) Representative: Walaski, Jan Filip

(56) References cited:
- EP-A- 1 304 871
- GB-A- 2 377 574

## Description

The present invention relates to a broadcast signal receiving system comprising broadcast signal receiving means; and output means for making the content of broadcast signals, received by the broadcast signal receiving means, perceivable.

Recently, with the developments in broadcast technology as well as demands from users, terrestrial digital broadcasts have started. Also, more member of the public are using satellite and cable broadcasts. However, different standards are applied to terrestrial digital broadcast signals, satellite digital broadcast signals, and cable digital broadcast signals. Moreover, broadcasters themselves sometimes apply different standards to broadcast signals. Therefore, as devices for viewing terrestrial broadcasts, satellite broadcasts or cable broadcasts are specifically manufactured to comply with the respective standards, users have to be equipped with extra devices to view broadcasts which originate from different broadcasters, or are carried over terrestrial, cable or satellite channels.

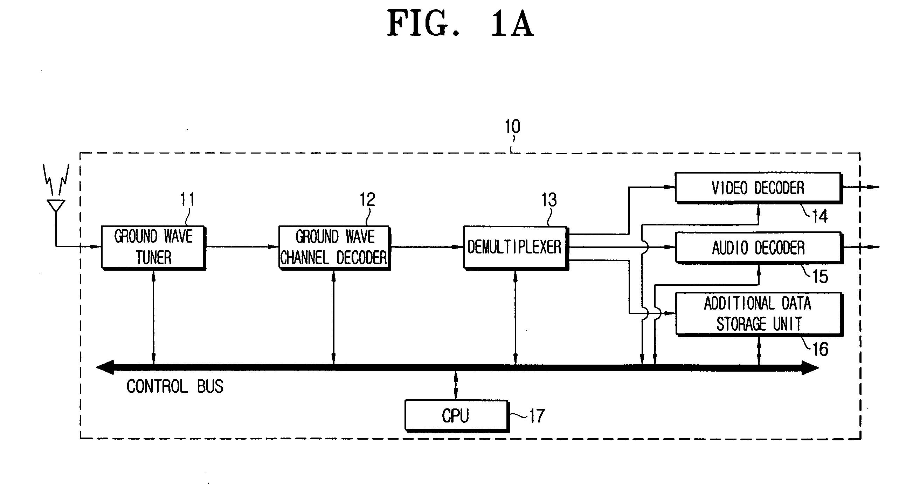

Figure 1A to Figure 1C are block diagrams for showing a known terrestrial digital broadcast signal receiver, satellite broadcast receiver, and cable broadcast receiver, respectively.

Referring to Figure 1A to Figure 1C, the terrestrial digital broadcast signal processing system 10 shown in Figure 1A has a terrestrial (sometimes referred to as "ground wave") tuner 11, a terrestrial channel decoder 12, a demultiplexer 13, a video decoder 14, an audio decoder 15, an additional data storage unit 16, and a central processing unit (CPU) 17.

In Figure 1A, the terrestrial tuner 11 tunes to a channel in the terrestrial frequency band, and receives a terrestrial digital broadcast signal. The terrestrial channel decoder 12 demodulates the digital broadcast signal and decodes the received digital broadcast signal in an appropriate manner. Therefore, a particular terrestrial channel is decoded.

The demultiplexer 13 separates the channel-decoded terrestrial digital broadcast signal into a video signal, an audio signal, and a data signal. The video decoder 14 decodes the separated video signal, and the audio decoder 15 decodes the separated audio signal. Further, the separated additional data is stored in the additional data storage unit 16, decoded in the CPU 17, and processed in a manner suited for the additional data. The CPU 17 runs the terrestrial broadcast signal processing plugin using a series of terrestrial broadcast signal processing operations as described above. It should be noted that the plugin can be sometimes referred to as "middleware". The plugin may take the form of software, hardware or a combination of the two.

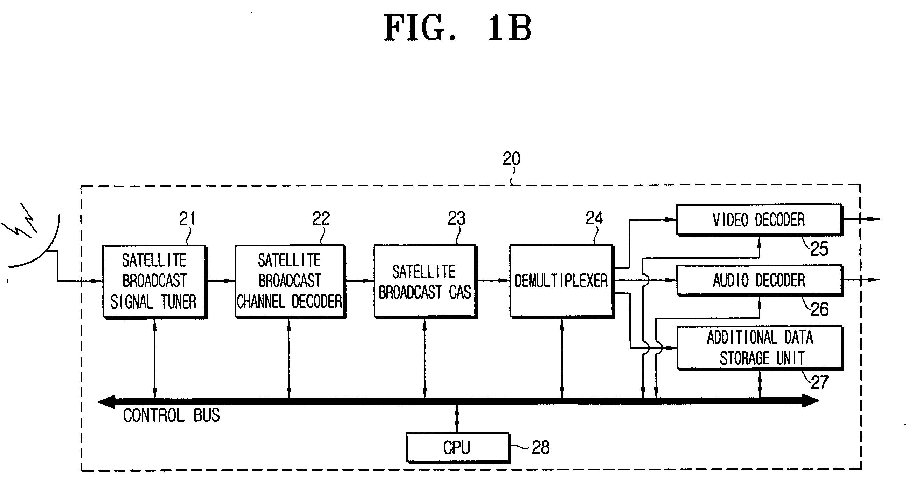

Figure 1B is a block diagram showing a satellite broadcast signal receiver 20, which includes a satellite broadcast signal tuner 21, a satellite broadcast channel decoder 22, a satellite broadcast conditional access system (CAS) 23, a demultiplexer 24, a video decoder 25, an audio decoder 26, an additional data storage unit 27, and a CPU 28.

The satellite broadcast signal tuner 21 tunes to a channel in the frequency band used for the satellite broadcasts, and receives a digital broadcast signal. The satellite broadcast channel decoder 22 demodulates and decodes the digital broadcast signal in an appropriate manner. Therefore, a particular digital satellite channel is decoded. In pay satellite broadcast services, the satellite broadcast CAS 23 reads a key from a CAS card which is provided and installed by a broadcast service provider. This key descrambles the digital broadcast signal (and, specifically, the video signal) when a user subscribes to a particular satellite channel.

The same descriptions as in Figure 1A are applied to the operations of the demultiplexer 24, video decoder 25, audio decoder 26, and additional data storage unit 27, and the CPU 28 runs the satellite broadcast signal processing plugin using a series of operations relevant to the satellite broadcast channel decoding process.

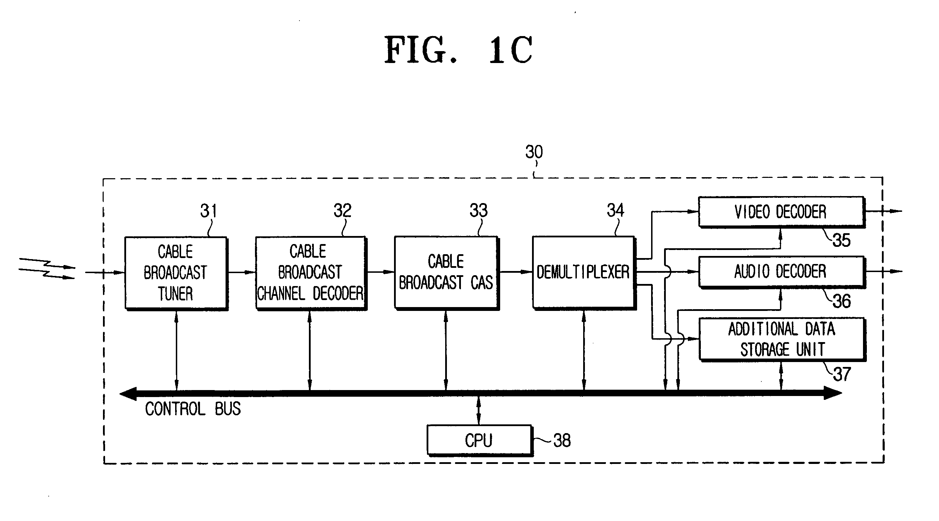

Figure 1C is a block diagram of a cable broadcast signal receiver 30, which includes a cable broadcast tuner 31, a cable broadcast channel decoder 32, a cable broadcast conditional access system (CAS) 33, a demultiplexer 34, a video decoder 35, an audio decoder 36, an additional data recorder 37, and a CPU 38.

The cable broadcast tuner 31 tunes to a channel in the frequency band used for cable broadcasts, and receives a cable digital broadcast signal. The cable broadcast channel decoder 32 demodulates and decodes the digital broadcast channel in an appropriate manner.

The operations of the cable broadcast CAS 33, demultiplexer 34, video decoder 35, audio decoder 36, and additional data storage unit 37 are the same as described in Figure 1B, and the CPU 38 runs the cable broadcast signal processing plugin to control a series of cable broadcast signal processing operations described as above.

As stated above, the terrestrial digital broadcast signal receiver 10, satellite broadcast signal receiver 20, and cable broadcast signal receiver 30 have the CAS's 23 and 33, demultiplexers 13, 24, and 34, video decoders 14, 25, and 35, audio decoders 15, 26, and 36, and additional data storage units 16, 27, and 37, which are the same in structure but driven by different plugins. Also, the tuners 11, 21, 31 and channel decoders 12, 22, and 32 are all different in structure according to the different standards for broadcast signal transmissions and receptions.

Therefore, it causes a problem of wasting resources and the expense associated with having all the above components in order to receive two or more of the above types of broadcast signals.

Further, in known broadcast signal receivers, a channel can only be viewed when the receiver and display are provided in the same location. This means that a user has to purchase numerous identical devices should they wish to view the received channels in other locations around their home.

Thus, the known system is wasteful of resources because of the different standards for broadcast signals as well as location restrictions. This has the effect that broadcasters have to provide more set-top boxes with the extra cost being passed to the subscribers. Moreover, some broadcasters charge two subscription fees if there are two set-top boxes located around a home.

The present general inventive concept has been developed in order to address the above drawbacks and other problems associated with the known arrangement.

GB2377574 discloses a video apparatus for use with a home entertainment system, comprising a plurality of software and or firmware definable logic blocks used to configure the apparatus to implement the desired video-graphic processing functions and video protocols employed in different video systems.

EP1304871 discloses a method and apparatus relating to a receiver/decoder in a digital television environment, including logical devices (including logical demultiplexer devices) for representing physical and other devices in the receiver/decoder.

The present invention relates to a broadcast signal receiving system comprising broadcast signal receiving means; and output means for making the content of broadcast signals, received by the broadcast signal receiving means, perceivable.

According to the invention, there is provided a digital broadcast signal processing system, comprising unit connectors that detachably connect digital broadcast signal interface units that receive digital broadcast signals and remove the signal characteristics according to the signal transmission and reception standard with respect to the received digital broadcast signals, a memory that stores processing code for use by a digital broadcast signal indicator to process the digital broadcast signals from which the signal characteristics according to the signal transmission and reception standard have been removed and a receiver CPU that controls the transmission of the processing code and the digital broadcast signal from which the signal characteristics according to the signal transmission and reception standard have been removed to a digital broadcast signal indicator.

The digital broadcast signal interface units may each include a tuner that tunes a channel and receives a digital broadcast signal, a channel decoder that performs demodulation and channel decoding with respect to the received digital broadcast signal according to a signal transmission and reception standard for the received digital broadcast signal, and removes the signal characteristics according to the signal transmission and reception standard and a unit interface that receives a digital request signal from the digital broadcast signal indicator, and provides an external device with the processing code and the digital broadcast signal from which the signal characteristics according to the signal transmission and reception standard have been removed by the controls of the receiver CPU.

The processing code may be developed in the JAVA programming language.

The digital broadcast signal processing system may further comprise a conditional access system (CAS) that descrambles the digital broadcast signal corresponding to a scrambling manner of the digital broadcast signal.

The digital broadcast signal may be any of a ground wave digital broadcast signal, satellite digital broadcast signal, and cable digital broadcast signal.

A broadcasting signal receiving system according to the present invention is characterised by the broadcast signal receiving means and the output means being discrete devices, a data communication channel between the broadcast signal receiving means and the output means, the broadcast signal receiving means storing program codes defining a signal processing operation, the broadcasting signal receiving means being configured to provide received broadcast signals and said program codes to the output means via the data communication channel and the Preferably, there is provided a device configured to operate as the broadcast receiving means, the device being modular and configured to receive modules (140), each module comprising a tuner operable to tune to a specific channel in said broadcast signal and a decoder operable to decode said channel.

Preferably, a device according to this embodiment comprises memory means (130) operable to store said program codes.

Also, an apparatus configured to operate as the output means in the system may be provided. Also, a module configured for use as the module may be provided.

An embodiment of the present invention will now be described, by way of example only, and with reference to Figures 2-9 of the accompanying drawings, in which:
Figure 1A to Figure 1C are block diagrams showing a known terrestrial digital broadcast signal receiver, satellite broadcast signal receiver, and cable broadcast signal receiver, respectively;
Figure 2 is a view schematically showing a digital broadcast signal processing system installed at home according to an embodiment of the present invention;
Figure 3 is a flow chart explaining the operation of the digital broadcast signal processing system of Figure 2;
Figure 4 is a block diagram showing in detail the digital broadcast signal receiver of Figure 2;
Figure 5A to Figure 5C are block diagrams illustrating in detail the digital broadcast signal interface units shown in Figure 4;
Figure 6 is a flow chart explaining the operation of the digital broadcast signal receiver of Figure 4;
Figure 7 is a flow chart explaining in detail the process of Figure 6 to remove signal characteristics according to signal transmission and reception standards;
Figure 8 is a block diagram showing in detail the digital broadcast signal indicator of Figure 2; and
Figure 9 is a flow chart explaining the operation of the digital broadcast signal indicator of Figure 8.

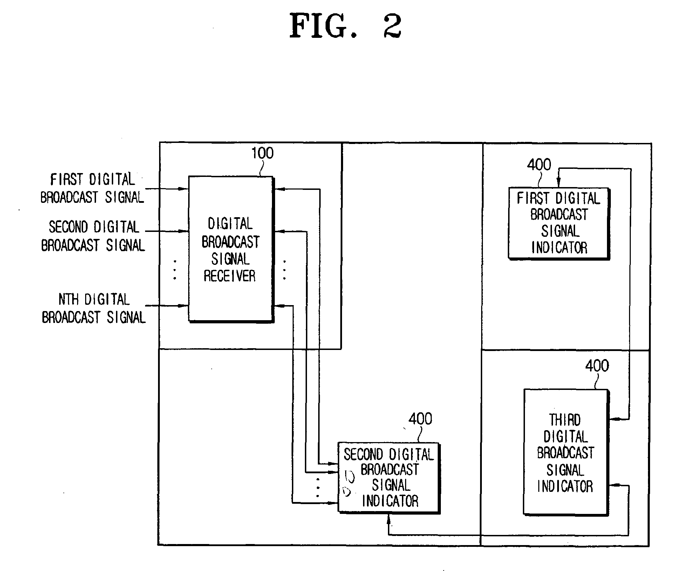

Referring to Figure 2, this embodiment includes a digital broadcast signal receiver 100 and at least one or more digital broadcast signal indicators 400 that are installed around a home.

The digital broadcast signal receiver 100 receives various digital broadcast signals such as terrestrial digital broadcast signals, satellite digital broadcast signals and cable digital broadcast signals. The digital broadcast signal receiver 100 extracts signals in accordance with a broadcast request signal transmitted from one of the digital broadcast signal indicators 400. The characteristics of the signal (i.e. the characteristics relating to the transmission medium and the like) are extracted. The signal (with characteristics removed) is transmitted to the digital broadcast signal indicator 400 which issued the broadcast request signal.

The signal characteristics are extracted by demodulating and decoding the appropriate received signal in an appropriate manner. This is done in the digital broadcast signal receiver 100. The receiver 100 also transmits plugin codes which relate to the signal to the broadcast signal indicator 400. The plugin is designed to descramble, the requested signal (if appropriate) and process the audio, video and additional data as required.

The digital broadcast signal indicator 400 sends a broadcast request signal to the digital broadcast signal receiver 100 in accordance with a user's input on the digital broadcast signal indicator 400, and receives a digital broadcast signal free of signal characteristics attributable to the standard with which the original digital broadcast signal was transmitted. In other words, the digital broadcast signal received at the digital broadcast signal indicator 400 has been demodulated and channel-decoded in accordance with the modulation and channel-coding scheme used transmit the original digital broadcast signal. At the same time, together with the digital broadcast signal, the digital broadcast signal indicator 400 receives a plugin for descrambling, video-processing, audio-processing, and additional data processing the requested digital broadcast signal. Next, the digital broadcast signal indicator 400 runs the received plugin to process the digital broadcast signal, and outputs images and sounds according to the processed digital broadcast signal.

It is possible that the plugin is developed and offered together with broadcast services by broadcasters who provide the digital broadcast signals. Further, the plugin may be coded using the broadcast signal processing Application Program Interface (API). The API consists of functions enabling the digital broadcast signal indicator 400 to control operations for processing digital broadcast signals. Further, the plugin and functions may be developed in a programming language, and the digital broadcast signal indicator 400 includes an interpreter that interprets the developed plugin and the API functions used in the plugin and is executed based on the interpretations. The programming language may be Java, and a Java virtual machine may be used as the interpreter for the plugin developed in Java. A skilled person would appreciate that a Java hardware implementation may also be considered.

Further, if the channel selected by the user on the digital broadcast signal indicator 400 is a subscription (pay) channel, the digital broadcast signal indicator 400 receives and descrambles the scrambled digital broadcast signal from the digital broadcast signal receiver 100. If the digital broadcast signal indicator 400 receives a descrambled channel from the digital broadcast signal receiver 100, expensive 5C cable has to be used as communication lines between the digital broadcast signal receiver 100 and the digital broadcast signal indicator 400, whereas, if the digital broadcast signal indicator 400 performs the descrambling therein, inexpensive communication lines can be used.

The present digital broadcast signal processing system enables communications by use of IEEE1394 high-speed data interface (HDSI) (sometimes called "FireWire"), and, if the IEEE 1394 interface is used, the respective digital broadcast signal indicators 400 are connected together as a serial network since the IEEE1394 interface supports daisy chain connection. IEEE1394 is a cabling bus system enabling devices to be connected in series for communication therebetween, so any of the digital broadcast signal indicators 400 can be connected to the digital broadcast signal receiver 100.

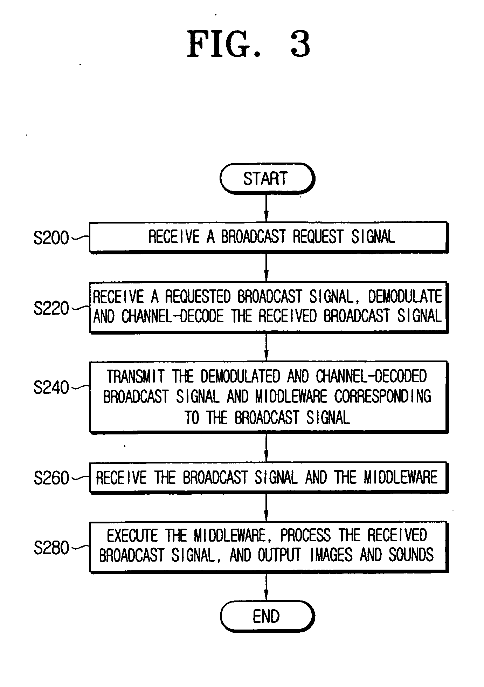

Referring to Figure 3, the digital broadcast signal indicator 400 transmits a broadcast request signal, requesting a satellite channel to be viewed. The broadcast request signal is transmitted to the digital broadcast signal receiver 100 (S200). The digital broadcast signal receiver 100 receives the request from the broadcast signal indicator (400), and demodulates and decodes the received satellite signal in a predetermined manner. The digital broadcast signal receiver 100 transmits the demodulated and decoded requested channel together with the plugin required for descrambling (if necessary), and video, audio and data processing to the digital broadcast signal indicator 400 (S240). The digital broadcast signal indicator 400 receives the plugin and the requested channel (S260). The digital broadcast signal indicator 400 then executes the received plugin to implement video processing and audio processing with respect to the received channel and outputs images and sounds (S280) as required.

Through the above system according to Figures 2 and 3, broadcast viewers can receive the broadcasts that they want at a low expense and in any location without additional subscription fees.

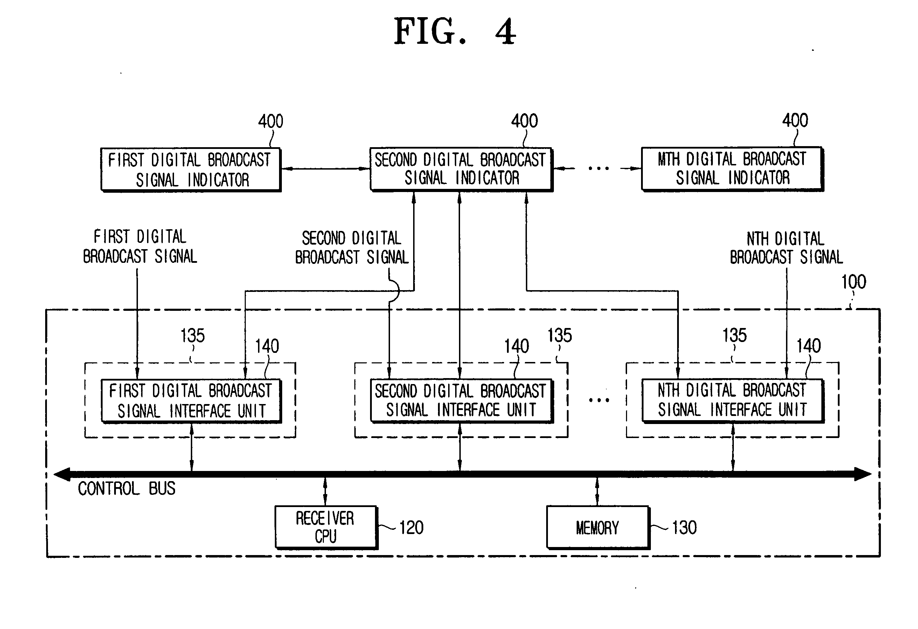

Referring to Figure 4, the present digital broadcast signal receiver 100 includes unit connectors 135, a receiver central processing unit (CPU) 120, and a memory 130.

The unit connectors 135 are connected to digital broadcast signal interface units 140 (described later) which are devices that extract the characteristics from the received signals, and connect the digital broadcast signal interface unit to a control bus. The characteristic is extracted when the received signal is demodulated and channel decoded. In other words, the signal whose characteristics are removed is a demodulated and decoded signal.

The memory 130 stores the plugin for the video and audio processing of the requested channel by the digital broadcast signal indicator 400.

As noted earlier, the plugin is a program for descrambling, video processing, audio processing, and data processing the requested signal in the digital broadcast signal indicator 400. The plugin can be developed in a programming language, and preferably, in Java. Further, the plugin can be developed by the provider of the digital broadcast signal interface unit 140, and the plugin is preferably developed by the maker of the digital broadcast signal indicator 400 using the Application Program Interface (API) that processes broadcast signals in which functions are defined for operations and operation controls of the digital broadcast signal indicator 400.

The receiver CPU 120 controls one digital broadcast signal interface unit 140 that receives the requested channel and transmits, to the digital broadcast signal indicator 400, the requested channel after demodulating and decoding. Further, the receiver CPU 120 controls the memory 130 so as to transmit the requested channel together with plugin codes corresponding to the requested channel.

The digital broadcast signal interface unit 140 can be added and removed, and, in an embodiment of the present invention, as the digital broadcast signal interface unit 140 is added, the plugin for the additional signals received by the added digital broadcast signal interface unit 140 is added to the memory 130.

In communications with the digital broadcast signal indicators, it is possible to use the IEEE1394 HSDI interface, and, in this case, the respective digital broadcast signal indicators 400 form a series network. This means that a structure is formed such that a unit interface included in each of the connected digital broadcast signal interface units 140 is connected to any of the digital broadcast signal indicators 400 connected to the serial network. The unit interface is preferably the IEEE1394 HSDI interface. With such a structure, the digital broadcast signal indicators constituting a network can communicate with the digital broadcast signal receiver 100 to which the digital broadcast signal interface unit 140 is connected.

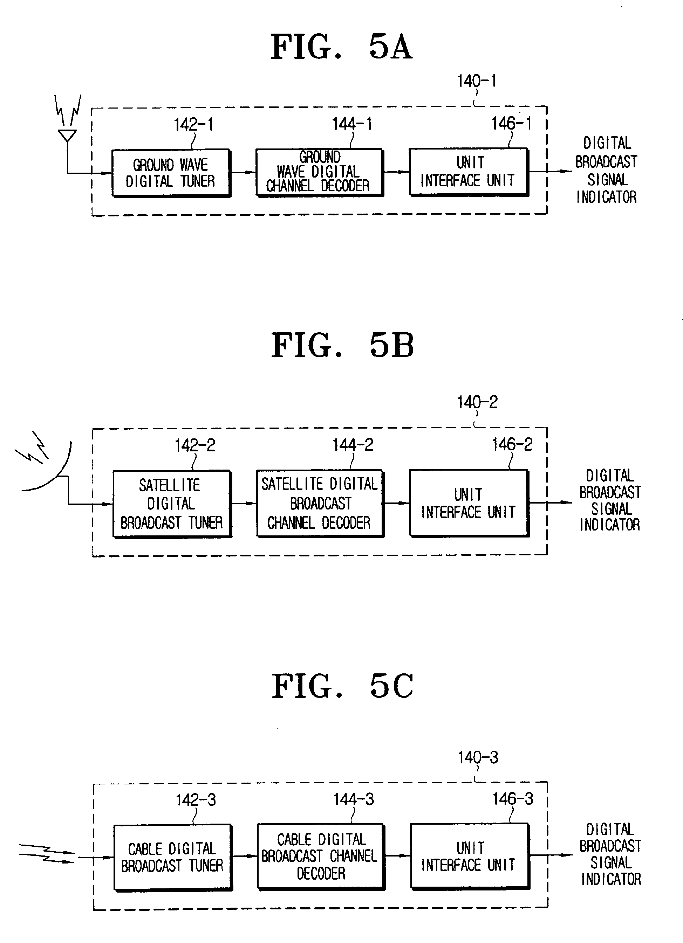

Referring to Figure 5A, which is a block diagram of the digital broadcast signal interface unit 140 for receiving terrestrial digital broadcasts, a digital broadcast signal interface unit 140-1 receives terrestrial digital signals. The digital broadcast signal interface unit 140-1 includes a terrestrial digital signal tuner 142-1 that tunes to a channel in the terrestrial digital signal and thus receives the digital broadcast signal, a terrestrial digital signal channel decoder 144-1 that demodulates and decodes the received terrestrial digital broadcast signal, and a unit interface 146-1 which is the IEEE1394 HSDI interface providing an interface with the digital broadcast signal indicators forming the network.

Referring to Figure 5B, which is a block diagram of the digital broadcast signal interface unit 140 for receiving digital satellite broadcasts, a digital broadcast signal interface unit 140-2 receives satellite digital broadcasts. The digital broadcast signal interface unit 140-2 includes a satellite digital broadcast tuner 142-1 that tunes to a channel in the satellite digital broadcast signal and thus receives the digital broadcast signal, a satellite digital broadcast channel decoder 144-2 that demodulates and decodes the received satellite digital broadcast signal, and a unit interface 146-2 which is the IEEE1394 HSDI interface providing an interface with the digital broadcast signal indicators forming the network.

Referring to Figure 5C, which is a block diagram of the digital broadcast signal interface unit 140 for receiving cable digital broadcast signals, a digital broadcast signal interface unit 140-3 receives cable digital broadcast signals. The digital signal interface unit 140-3 includes a cable digital broadcast tuner 142-3 that tunes to a channel in the cable digital broadcast signal and thus receives the cable digital broadcast signal, a cable digital broadcast channel decoder 144-3 that demodulates and decodes the received cable digital broadcast signal, and a unit interface 146-3 which is the IEEE1394 HSDI interface providing an interface with the digital broadcast signal indicators forming a network.

It is possible for each of the digital broadcast signal interface units to further include a memory (not shown) for storing plugin for video processing and audio processing the requested channel in the digital broadcast signal indicators 400.

With the above structure, the present digital broadcast signal receiver can conveniently receive more digital broadcast signals by merely adding appropriate digital broadcast signal interface units to the unit connectors 135 located in the digital broadcast signal receiver.

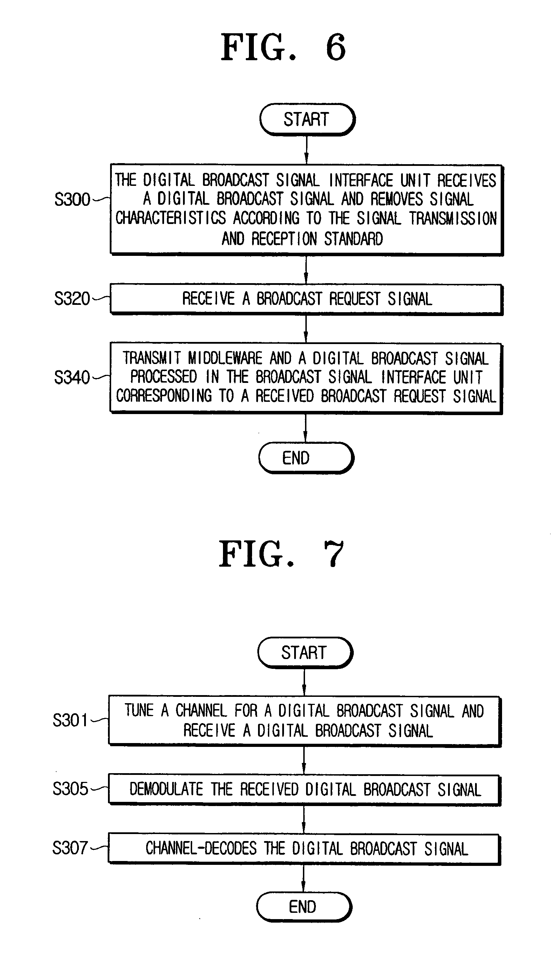

Referring to Figure 6, when the digital broadcast signal receiver 100 is turned on, each of the digital broadcast signal interface units 140 receive a corresponding digital broadcast signal, and extracts signal transmission and reception characteristics from the received digital broadcast signal (S300).

The digital broadcast signal interface units 140 then receive a broadcast request signal requesting a specific channel from a digital broadcast signal indicator 400 in communication therewith (S320).

The digital broadcast signal(s) received by the digital signal interface unit(s) 140 is/are sent to the receiver CPU 120, and the receiver CPU 120 controls the digital broadcast signal interface units 140 receiving the requested channel such that the demodulated and decoded channel is transmitted to the digital broadcast signal indicator 400. Also, the receiver CPU 120 transmits a plugin program which controls the video, audio and data processing of the channel to the digital broadcast signal indicator 400 (S340).

The requested channel and the plugin are transmitted to the digital broadcast signal indicator that has requested the channel through the Daisy chain network which uses the IEEE 1394 HSDI interfaces.

Referring to Figure 7, the digital broadcast signal receiver 100 tunes to a channel contained within the received digital broadcast signal and receives the receives the requested channel (S301). The digital broadcast signal receiver 100 demodulates and decodes the requested channel, in an appropriate manner. (307).

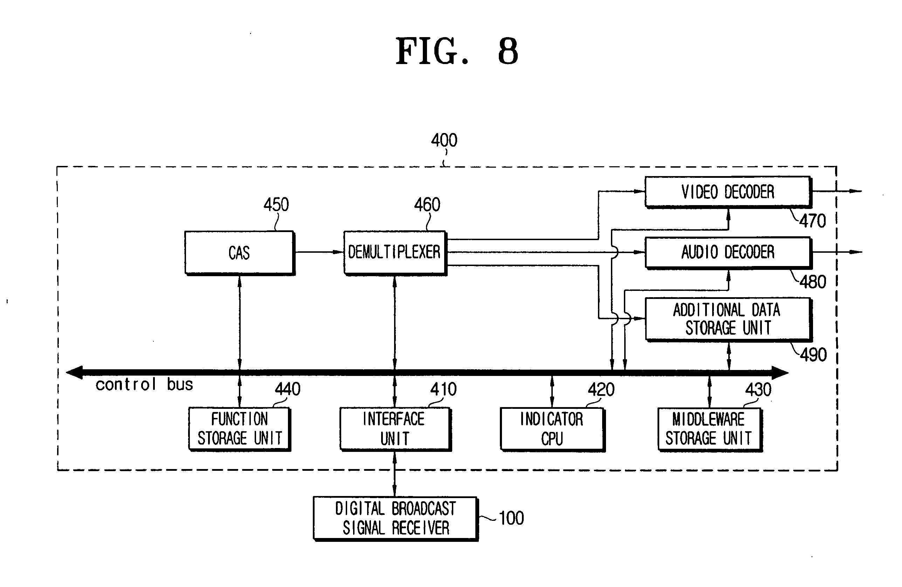

Referring to Figure 8, the digital broadcast signal indicator 400 includes an interface unit 410, an indicator CPU 420, a plugin storage unit 430, a function storage unit 440, a CAS 450, a demultiplexer 460, a video decoder 470, an audio decoder 480, and an additional data storage unit 490.

It is possible to use the IEEE1394 HSDI interface as the interface unit 410. The interface unit 410 provides an interface to receive the demodulated and decoded channel as well as plugin for processing the requested channel from the digital broadcast signal receiver 100.

Here, the plugin allows the processing of the requested channel in the digital broadcast signal indicator by including a program for descrambling, demultiplexing, video/audio decoding, and additional data processing. The plugin is developed in a programming language, preferably, Java. Further, it is possible to develop the plugin by using the broadcast signal processing API provided by a maker of the digital broadcast signal indicator 400 in which operations controls of the digital broadcast signal indicator are defined.

The plugin storage unit 430 stores the plugin received from the external digital broadcast signal receiver 100, and the function storage unit 440 stores functions provided in the API.

The indicator CPU 420 calls functions stored in the function storage unit 440 through a plugin interpreter, and runs the plugin stored in the plugin storage unit 440. In an embodiment of the present invention, the digital broadcast signal indicator 400 further includes an interpreter storage unit (not shown) for storing the plugin interpreter. For example, a Java virtual machine is used when the plugin is developed in the Java programming language. Further, the indicator CPU 420 controls the CAS 450, demultiplexer 460, video decoder 470, audio decoder 480, and additional data storage unit 490 to process the received digital broadcast signal by use of the executed plugin.

As above, since the plugin corresponding to the requested channel contains information extracted from the received signal, the makers of the digital broadcast signal indicator can manufacture these products regardless of diverse standards applied to digital broadcast signals. In other words, the plugin information is specific to the type of received signal, and that this information is transferred to the digital broadcast signal indicator 400 with the requested channel.
If a received digital broadcast signal is for a subscription channel, the CAS 450 descrambles the requested channel in an appropriate manner. The descrambling is done by reading key values corresponding to the requested channel from a card (not shown) built in the CAS 450. Therefore, the CAS 450 preferably contains the card storing the key values corresponding to all scrambled digital broadcast signals that the digital broadcast signal receiver receives.

The demultiplexer 460 separates a signal restored by the CAS 450 or a non-scrambled signal into a video signal, audio signal, and additional data.

The video decoder 470 decodes the video signal under controls of the running plugin, and the video decoder 470 is an MPEG video decoder. Further, the audio decoder 480 decodes the audio signal under controls of the running plugin, and the audio decoder 480 can be an MPEG audio decoder or a Dolby AC-3.

The separated additional data is stored in the additional data storage unit 490, and the indicator CPU 420 decodes the additional data and performs a certain process corresponding to the decoded additional data under controls of the running plugin.

The decoded video signal is displayed on an external display unit (not shown) via a video encoder (not shown), and the decoded audio signal is output as sounds via a digital/analogue converter (not shown) and external speakers (not shown). The digital broadcast signal indicator 400 may also include a video output display unit (not shown) and audio output speakers (not shown).

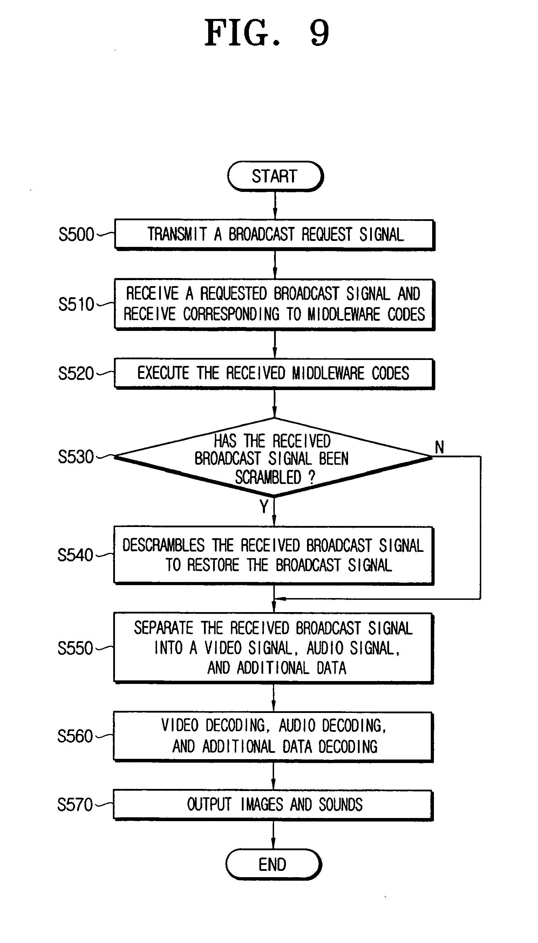

Referring to Figure 8 and Figure 9, the digital broadcast signal indicator 400 transmits a request signal requesting a specific channel to be transmitted thereto according to a user's input (S500). The broadcast request signal includes information about the digital broadcast signal indicator 400 sending the request signal as well as information pertaining to the channel requested.

Based on the request signal sent in operation S500, the digital broadcast signal indicator 400 receives the requested channel and plugin for processing the requested channel (S510), and executes the plugin (S520).

First, the digital broadcast signal indicator 400 checks if the received channel is scrambled (S530), and, if the received channel is not scrambled, separates the broadcast signal into a video signal, audio signal, and additional data (S550). If the received broadcast signal is scrambled, the digital broadcast signal indicator 400 receives the key relating to the requested scrambled channel, and descrambles the received broadcast signal (S550). The key is obtained from a card, wherein the card is one of at least one or more cards mounted in the CAS 150. The descrambling is controlled by the plugin running in the operation S500.

Once the descrambling is complete and the unscrambled signal is restored, the digital broadcast signal indicator 400 separates the unscrambled signal into a video signal, audio signal, and additional data signal (S560). The digital broadcast signal indicator 400 performs video-decoding, audio-decoding, and additional data processing with respect to the separated signals in operation S550, and outputs images and sounds (S570).

Since makers can manufacture such digital broadcast signal indicators irrespective of the standard that respective broadcasters apply to their broadcast signals, and such digital broadcast signal indicators have a simplified internal structure, broadcast viewers can be equipped with such digital broadcast signal indicators at a low expense.

With the above method, the present digital broadcast signal processing system enables not only users to easily view diverse digital broadcasts at a low expense but also broadcast service providers to provide broadcast services at a low cost so that the providers can get more subscribers.

As described above, the system constructed according to the present invention enables users to remove investment in the identical devices for the system, so that the users can be provided with multiple broadcast services at a low expense, and, further, the system facilitates its expansion to more digital broadcast signals since the digital broadcast signals can be more widely received only with simple connections of digital broadcast signal interface units for broadcast signals that users want to receive. Further, the system has an effect of reducing the users' expense due to overcoming the conventional limitation to locations in receiving broadcast signals.

In the meantime, the broadcast service providers can reduce the broadcast service cost since they have only to provide the digital broadcast signal interface units as devices with which they have to provide their subscribers to receive the broadcast services they offer, to thereby collect more subscribers.

Further, the makers of the digital broadcast signal receivers and the digital broadcast signal indicators can reduce the cost caused by the processing of the broadcast signals characterized in compliance with standards.

## Claims

1. A digital broadcast signal processing system, comprising:
connectors (135) that detachably connect digital broadcast signal interface units (140), that receive digital broadcast signals, to a broadcast receiver, and are arranged to remove signal characteristics according to the signal transmission and reception standard with respect to the received digital broadcast signals; and
a receiver CPU (120) arranged to receive a request, from a broadcast signal indicator, for a scrambled digital broadcast signal received by one of the connectors;
wherein, on receiving the request, the receiver CPU is arranged to:
control the transmission of the requested scrambled digital broadcast signal from which the signal characteristics according to the signal transmission and reception standard have been removed by the one of the connectors (135) to the digital broadcast signal indicator (400), and
control the transmission of a descrambling program to the digital broadcast signal indicator, for descrambling the requested digital broadcast signal from which the signal characteristics according to the signal transmission and reception standard have been removed, wherein the program includes information extracted from the requested scrambled digital broadcast signal.

2. The digital broadcast signal processing system as claimed in claim 1, wherein the digital broadcast signal interface units (140) each include:
a tuner (142) that tunes a channel and receives a digital broadcast signal;
a channel decoder (144) that performs demodulation and channel decoding with respect to the received digital broadcast signal according to a signal transmission and reception standard for the received digital broadcast signal, and removes the signal characteristics according to the signal transmission and reception standard; and
a unit interface (146) that receives a digital request signal from the digital broadcast signal indicator (400) and provides the broadcast signal indicator with the descrambling program and the scrambled digital broadcast signal from which the signal characteristics according to the signal transmission and reception standard have been removed under the control of the receiver CPU (120).

3. The digital broadcast signal processing system as claimed in claim 1, wherein the descrambling program is developed in the JAVA programming language.

4. The digital broadcast signal processing system as claimed in claim 1, further comprising a conditional access system (CAS) (450) that descrambles the digital broadcast signal corresponding to a scrambling manner of the digital broadcast signal, under the control of the received descrambling program.

5. The digital broadcast signal processing system as claimed in claim 1, wherein the digital broadcast signal is any of a ground wave digital broadcast signal, satellite digital broadcast signal, and cable digital broadcast signal.

6. A method of processing a digital broadcast signal the method, comprising:
detachably connecting digital broadcast signal interface units (140), that receive digital broadcast signals, to a broadcast receiver, and removing signal characteristics according to the signal transmission and reception standard with respect to the received digital broadcast signals; and
receiving request, from a broadcast signal indicator, for a scrambled digital broadcast signal received by one of the connectors;
wherein, on receiving the request,
controlling the transmission of the requested scrambled digital broadcast signal from which the signal characteristics according to the signal transmission and reception standard have been removed by the one of the connectors (135) to the digital broadcast signal indicator (400), and
controlling the transmission of a descrambling program to the digital broadcast signal indicator, for descrambling the requested digital broadcast signal from which the signal characteristics according to the signal transmission and reception standard have been removed, wherein the program includes information extracted from the requested scrambled digital broadcast signal.

7. A method according to claim 6, including:
tuning a channel and receiving a scrambled digital broadcast signal;
demodulating and decoding the received scrambled digital broadcast signal according to a signal transmission and reception standard for the received digital broadcast signal;
removing the signal characteristics according to the signal transmission and reception standard;
receiving a digital request signal from the digital broadcast signal indicator; and
providing the broadcast signal indicator with the descrambling program and the scrambled digital broadcast signal from which the signal characteristics according to the signal transmission and reception standard have been removed in response to the received request.

8. A method according to claim 6, including developing the descrambling program in the JAVA programming language.

9. A method according to any one of claims 6, including descrambling the digital broadcast signal corresponding to a scrambling manner of the digital broadcast signal, under the control of the descrambling program.

10. A method according to any one of claims 6, wherein the digital broadcast signal is any one of a ground wave digital broadcast signal, a satellite digital broadcast signal and a cable digital broadcast signal.

## Patentansprüche

1. Digital-Rundfunksignal-Verarbeitungssystem, umfassend:
Verbinder (135), die abnehmbar Digital-Rundfunksignal-Schnittstelleneinheiten (140), die digitale Rundfunksignale empfangen, mit einem Rundfunkempfänger verbinden und angeordnet sind, um Signalmerkmale gemäß dem Signalübertragungs- und -empfangsstandard in Bezug auf die empfangenen digitalen Rundfunksignale zu entfernen; und
eine Empfänger-CPU (120), die angeordnet ist, um eine Anforderung, von einem Rundfunksignal-Indikator, eines verwürfelten digitalen Rundfunksignals, das von einem der Verbinder empfangen wurde, zu empfangen;
wobei, bei Empfang der Anforderung, die Empfänger-CPU angeordnet ist zum:
Steuern der Übertragung des angeforderten verwürfelten digitalen Rundfunksignals, von dem die Signalmerkmale gemäß dem Signalübertragungs- und - empfangsstandard entfernt wurden, durch den einen der Verbinder (135) an den Digital-Rundfunksignal-Indikator (400), und
Steuern der Übertragung eines Entwürfelungsprogramms an den Digital-Rundfunksignal-Indikator zum Entwürfeln des angeforderten digitalen Rundfunksignals, von dem die Signalmerkmale gemäß dem Signalübertragungs- und -empfangsstandard entfernt wurden, wobei das Programm Informationen enthält, die von dem angeforderten verwürfelten digitalen Rundfunksignal extrahiert wurden.

2. Digital-Rundfunksignal-Verarbeitungssystem nach Anspruch 1, wobei die Digital-Rundfunksignal-Schnittstelleneinheiten (140) jeweils enthalten:
einen Tuner (142), der einen Kanal abstimmt und ein digitales Rundfunksignal empfängt;
einen Kanaldecoder (144), der Demodulation und Kanaldecodierung in Bezug auf das empfangene digitale Rundfunksignal gemäß einem Signalübertragungs- und - empfangsstandard für das empfangene digitale Rundfunksignal durchführt und die Signalmerkmale gemäß dem Signalübertragungs- und -empfangsstandard entfernt; und
eine Einheitsschnittstelle (146), die ein digitales Anforderungssignal von dem Digital-Rundfunksignal-Indikator (400) empfängt und dem Rundfunksignal-Indikator das Entwürfelungsprogramm und das verwürfelte digitale Rundfunksignal, von dem die Signalmerkmale gemäß dem Signalübertragungs- und -empfangsstandard unter der Steuerung der Empfänger-CPU (120) entfernt wurden, bereitstellt.

3. Digital-Rundfunksignal-Verarbeitungssystem nach Anspruch 1, wobei das Entwürfelungsprogramm in der Programmierungssprache JAVA entwickelt ist.

4. Digital-Rundfunksignal-Verarbeitungssystem nach Anspruch 1, weiter umfassend ein Zugangsbeschränkungssystem (CAS) (450), das das digitale Rundfunksignal korrespondierend mit einer Verwürfelungsweise des digitalen Rundfunksignals unter der Steuerung des empfangenen Entwürfelungsprogramms entwürfelt.

5. Digital-Rundfunksignal-Verarbeitungssystem nach Anspruch 1, wobei das digitale Rundfunksignal eines eines Bodenwellen-Digital-Rundfunksignals, Satelliten-Digital-Rundfunksignals und Kabel-Digital-Rundfunksignals ist.

6. Verfahren zum Verarbeiten eines digitalen Rundfunksignals, das Verfahren umfassend:
abnehmbares Verbinden von Digital-Rundfunksignal-Schnittstelleneinheiten (140), die digitale Rundfunksignale empfangen, mit einem Rundfunkempfänger und Entfernen von Signalmerkmalen gemäß dem Signalübertragungs- und - empfangsstandard in Bezug auf die empfangenen digitalen Rundfunksignale; und
Empfangen einer Anforderung, von einem Rundfunksignal-Indikator, eines verwürfelten digitalen Rundfunksignals, das von einem der Verbinder empfangen wurde;
dabei, bei Empfang der Anforderung,
Steuern der Übertragung des angeforderten verwürfelten digitalen Rundfunksignals, von dem die Signalmerkmale gemäß dem Signalübertragungs- und - empfangsstandard entfernt wurden, durch den einen der Verbinder (135) an den Digital-Rundfunksignal-Indikator (400), und
Steuern der Übertragung eines Entwürfelungsprogramms an den Digital-Rundfunksignal-Indikator zum Entwürfeln des angeforderten digitalen Rundfunksignals, von dem die Signalmerkmale gemäß dem Signalübertragungs- und -empfangsstandard entfernt wurden, wobei das Programm Informationen enthält, die von dem angeforderten verwürfelten digitalen Rundfunksignal extrahiert wurden.

7. Verfahren nach Anspruch 6, enthaltend:
Abstimmen eines Kanals und Empfangen eines verwürfelten digitale Rundfunksignals;
Demodulieren und Decodieren des empfangenen verwürfelten digitalen Rundfunksignals gemäß einem Signalübertragungs- und -empfangsstandard für das empfangene digitale Rundfunksignal;
Entfernen der Signalmerkmale gemäß dem Signalübertragungs- und - empfangsstandard;
Empfangen eines digitalen Anforderungssignals von dem Digital-Rundfunksignal-Indikator; und
Bereitstellen, für den Rundfunksignal-Indikator, des Entwürfelungsprogramms und des verwürfelten digitalen Rundfunksignals, von dem die Signalmerkmale gemäß dem Signalübertragungs- und -empfangsstandard entfernt wurden, als Reaktion auf die empfangene Anforderung.

8. Verfahren nach Anspruch 6, enthaltend Entwickeln des Entwürfelungsprogramms in der Programmierungssprache JAVA.

9. Verfahren nach einem der Ansprüche 6, enthaltend Entwürfeln des digitalen Rundfunksignals korrespondierend mit einer Verwürfelungsweise des digitalen Rundfunksignals unter der Steuerung des Entwürfelungsprogramms.

10. Verfahren nach einem der Ansprüche 6, wobei das digitale Rundfunksignal eines eines Bodenwellen-Digital-Rundfunksignals, eines Satelliten-Digital-Rundfunksignals und eines Kabel-Digital-Rundfunksignals ist.

## Revendications

1. Système de traitement de signaux numériques de diffusion, comprenant :
des connecteurs (135) qui connectent de façon amovible des unités d'interface de signaux numériques de diffusion (140), lesquelles reçoivent des signaux numériques de diffusion, à un récepteur de diffusion, et sont agencés pour supprimer des caractéristiques de signal des signaux numériques de diffusion reçus en fonction de la norme d'émission et de réception de signaux ; et
une unité centrale de récepteur (120) agencée pour recevoir une requête, depuis un indicateur de signal de diffusion, de signal numérique de diffusion brouillé reçu par l'un des connecteurs ;
dans lequel, à la réception de la requête, l'unité centrale de récepteur est agencée pour :
commander la transmission du signal numérique de diffusion brouillé demandé dont les caractéristiques de signal ont été supprimées en fonction de la norme d'émission et de réception de signaux par l'un des connecteurs (135) à l'indicateur de signal numérique de diffusion (400), et
commander la transmission d'un programme de désembrouillage à l'indicateur de signal numérique de diffusion, pour désembrouiller le signal numérique de diffusion demandé dont les caractéristiques de signal ont été supprimées en fonction de la norme d'émission et de réception de signaux, le programme comportant des informations extraites du signal numérique de diffusion brouillé demandé.

2. Système de traitement de signaux numériques de diffusion selon la revendication 1, dans lequel
les unités d'interface de signaux numériques de diffusion (140) comportent chacune :
un syntoniseur (142) qui syntonise un canal et reçoit un signal numérique de diffusion ;
un décodeur de canal (144) qui exécute une démodulation et un décodage de canal relativement au signal numérique de diffusion reçu en fonction d'une norme d'émission et de réception de signaux du signal numérique de diffusion reçu, et supprime les caractéristiques du signal en fonction de la norme d'émission et de réception de signaux ; et
une interface d'unité (146) qui reçoit un signal numérique de requête depuis l'indicateur de signaux numériques de diffusion (400) et fournit à l'indicateur de signaux de diffusion le programme de désembrouillage et le signal numérique de diffusion brouillé dont les caractéristiques de signal ont été supprimées en fonction de la norme d'émission et de réception de signaux sous la commande de l'unité centrale de récepteur (120).

3. Système de traitement de signaux numériques de diffusion selon la revendication 1, dans lequel le programme de désembrouillage est développé dans le langage de programmation JAVA.

4. Système de traitement de signaux numériques de diffusion selon la revendication 1, comprenant en outre un système d'accès conditionnel (CAS) (450) qui désembrouille le signal numérique de diffusion correspondant à un mode de brouillage du signal numérique de diffusion, sous la commande du programme de désembrouillage reçu.

5. Système de traitement de signaux numériques de diffusion selon la revendication 1, dans lequel le signal numérique de diffusion est n'importe lequel d'un signal numérique de diffusion par ondes de sol, d'un signal numérique de diffusion par satellite, et d'un signal numérique de diffusion par câble.

6. Procédé de traitement d'un signal numérique de diffusion, le procédé comprenant :
la connexion de façon amovible d'unités d'interface de signaux numériques de diffusion (140), lesquelles reçoivent des signaux numériques de diffusion, à un récepteur de diffusion, et la suppression de caractéristiques de signal des signaux numériques de diffusion reçus en fonction de la norme d'émission et de réception de signaux ; et
la réception d'une requête, depuis un indicateur de signal de diffusion, d'un signal numérique de diffusion brouillé reçu par l'un des connecteurs ;
à la réception de la requête :
la commande de la transmission du signal numérique de diffusion brouillé demandé dont les caractéristiques de signal ont été supprimées en fonction de la norme d'émission et de réception de signaux par l'un des connecteurs (135) à l'indicateur de signal numérique de diffusion (400), et
la commande de la transmission d'un programme de désembrouillage à l'indicateur de signal numérique de diffusion, pour désembrouiller le signal numérique de diffusion demandé dont les caractéristiques de signal ont été supprimées en fonction de la norme d'émission et de réception de signaux, le programme comportant des informations extraites du signal numérique de diffusion brouillé demandé.

7. Procédé selon la revendication 6, comportant :
la syntonisation d'un canal et la réception d'un signal numérique de diffusion brouillé;
la démodulation et le décodage du signal numérique de diffusion brouillé reçu en fonction d'une norme d'émission et de réception de signaux du signal numérique de diffusion reçu ;
la suppression des caractéristiques de signal en fonction de la norme d'émission et de réception de signaux ;
la réception d'un signal numérique de requête depuis l'indicateur de signal numérique de diffusion ; et
la fourniture à l'indicateur de signal de diffusion du programme de désembrouillage et du signal numérique de diffusion brouillé dont les caractéristiques de signal ont été supprimées en fonction de la norme d'émission et de réception de signaux en réponse à la requête reçue.

8. Procédé selon la revendication 6, comportant le développement du programme de désembrouillage dans le langage de programmation JAVA.

9. Procédé selon l'une quelconque des revendications 6 *[sic]*, comportant le désembrouillage du signal numérique de diffusion correspondant à un mode de brouillage du signal numérique de diffusion, sous la commande du programme de désembrouillage.

10. Procédé selon l'une quelconque des revendications 6 *[sic],* dans lequel le signal numérique de diffusion est n'importe lequel d'un signal numérique de diffusion par ondes de sol, d'un signal numérique de diffusion par satellite, et d'un signal numérique de diffusion par câble.
